# EUROPEAN PATENT SPECIFICATION

(11) **EP 2 532 498 B1**
(45) Date of publication and mention of the grant of the patent: **27.11.2013**
(21) Application number: 11447012.3
(22) Date of filing: 10.06.2011
(51) Int. Cl.: C09K 21/04, C09J 161/06, B27N 1/00, C09J 161/00, C09K 21/10

(54) **Method of reducing the emission of formaldehyde from formaldehyde laden wood panels**
Verfahren zur Reduzierung der Emission von Formaldehyd aus formaldehydbeladenen Holzpaneelen
Procédé de réduction d'émission de formaldéhyde de panneaux en bois chargés de formaldéhyde

(43) Date of publication of application: 12.12.2012
(73) Proprietor: Advachem Sa, 7334 Hautrage (BE)
(72) Inventor: Francis, Georges, 7334 Hautrage (BE)
(74) Representative: Powis de Tenbossche, Roland

(56) References cited:
- CA-A1- 1 054 918
- CN-A- 101 412 231
- JP-A- 2000 087 541
- US-A- 3 939 107
- US-A- 3 976 752

## Description

The present invention relates to a method according to claim 1 of reducing the emission of formaldehyde from formaldehyde laden products, such as particle boards or fiber boards. It also relates to an aqueous solution comprising modified ammonium polyphosphate for use in the method. The method, according to the present invention, comprises a treatment step of the fibres or the particles of wood with the aqueous solution of comprising modified ammonium polyphosphate, mentioned hereafter as MAPP, before contacting the fibres and/or particles with the said resin, possibly after a drying step.

The present invention also relates to a product according to claim 16, produced with the method of claim 1.

Most of the wood panels produced in Europe are agglomerated with formaldehyde based binders which remain a good compromise cost, performance and ease of use for such applications. These binders are thermosetting resins obtained by polycondensation of formaldehyde, urea and, possibly, melamine. Typically, these adhesives compositions contain a substantial molar excess of formaldehyde. Some of this excess is released upon curing of the resin during the manufacture of the panel. However, it is well known that formaldehyde continues to be released from these panels even after the manufacturing process is completed.

Thus, formaldehyde released in the indoor air has been a major concern for many years.

Several attempts have been made for many years for reducing formaldehyde emission:
- Modification of the glue by decreasing the molar ratio formaldehyde / urea
- Addition of amino-compounds to the gluing mixture, like urea (NH₂CONH₂), during the manufacture of the panel (for example JP2000/087541 discloses a wax mixing comprising urea as formaldehyde catcher)
   - Mixing the formaldehyde based resin with other gluing material
   - Increasing the press factor.
   - Using free formaldehyde binders

But all these methods entail significant mechanical, chemical, environmental or economical disadvantages. It was therefore necessary and urgent to propose an efficient solution to avoid these drawbacks, allowing the manufacture of wood panels with low formaldehyde emission.

Ammonium polyphosphate is an inorganic salt of polyphosphoric acid and ammonia. The chain length (n) of this polymeric compound is both variable and branched, and can be greater than 1 000. Short and linear chain APPs (n < 100) are more water sensitive (hydrolysis) and less thermally stable than longer chain APPs (n >1000), which show a very low water solubility (< 0.1 g/ 100 ml).

Chemical Formula and structure: [NH₄ PO₃]ₙ

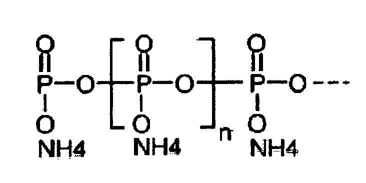

### Formula 1 : APP Structure

APP is a stable, non-volatile compound. In contact with water APP it slowly gets hydrolysed to monoammonium phosphate (orthophosphate). Higher temperatures and prolonged exposure to water will accelerate the hydrolysis. Long chain APP starts to decompose at temperatures above 300°C to polyphosphoric acid and ammonia. Short chain APP will begin to decompose at temperatures above 150 °C.

CA1054918 discloses particle board comprising Ammonium polyphosphate as fire-retardant agent. Such ammonium polyphosphate is not a formaldehyde catcher.

Accordingly, the present invention provides a method of reducing the emission of formaldehyde from wood-based panels containing formaldehyde-based resins, by which the above mentioned problems due to formaldehyde are overcome.

The method according to the invention comprises treatment before use of the fibres or the particles of wood (possibly agglomerated to form a layer or thin sheet) with a (advantageously aqueous) solution or suspension comprising ammonium polyphosphate, urea or a modified ammonium polyphosphate, mentioned hereafter as MAPP.

"Wood containing particles and fibres" or "wood particles and fibres" mean in the present specification particles and fibres produced or prepared from wood and/or wood residues, cellulose containing particles and fibres, particles from paper, cardboard, etc. The wood containing particles and fibres can be mixed with other particles and fibres, such as with glass fibres, glass beads, hollow glass beads, etc. The wood containing particles and fibres are advantageously free or substantially free of organic binder. The wood containing particles and fibres can be shaped or has the form of thin layers or lamellas, which are for example intended to be glued together by means of a formaldehyde glue for forming a layered structured product.

By "wood-based panels" is herein meant "particle board panel, MDF (medium density fibre board panel) and plywood", said panels can possibly contain particles and fibres which are not wood containing particles and fibres. Wood based panels means also layered products, such as product comprising a series of wood thin layers glued together with interposition with a formaldehyde based glue.

The invention relates thus to a method of production of formaldehyde laden products comprising at least wood containing particles and/or fibres and at least a formaldehyde based resin system, with reduced emission of formaldehyde during the production of said products, as well as after the said production, wherein the method comprises at least the following steps
* a mixing or contacting step in which at least wood containing particles and/or fibres and formaldehyde based resin system are mixed or contacted together, and
* a hardening step in which the mixture of at least wood containing particles and/or fibres and formaldehyde based resin system is hardened.

The method of the invention is essentially characterised in that the wood containing particles and/or fibres, prior to be mixed or contacted with a formaldehyde based resin system, are treated with a solution or a suspension containing at least :
- ammonium polyphosphate (APP) with a water solubility at 25°C greater than 0.5g / 100ml and/or having a weight average particle size of less than 50µm,
- urea, or/and
- reaction products or compounds (MAPP) issued from the reaction of urea with said ammonium polyphosphate, wherein the weight ratio ammonium polyphosphate/ urea used for the preparation of the said solution or suspension is comprised between 1 : 1 and 25 : 1, advantageously between 2 : 1 and 15:1, preferably between 5 : 1 and 12 : 1,
   advantageously at least partly during the reaction of urea with said ammonium polyphosphate for forming said reaction products or compounds (MAPP).

The said reaction product (MAPP) has advantageously a water solubility at 25°C greater than 2g/100ml, advantageously greater than 10g/100ml, preferably greater than 20g/100ml, such as comprised between 25g to 70g /100ml, for example from 50g to 70g / 100ml. The reaction product MAPP can also be a mixture of MAPPs with different n or with different water solubility.

The APP used for the preparation of the MAPP is advantageously a compound of formula 1, with n being less than 20, preferably less than 10, such as comprised between 2 and 7. The APP can also be a mix of compounds of formula 1, in this case "n" is the weight average of the different n values for the different compounds of formula 1. The APP is most preferably substantially free of any compounds of formula 1 with n greater than 10. Preferably, the APP mixtures comprise less than 25% by weight of compound of formula 1 with n equal to 1.

According to an advantageous embodiment, said solution or suspension containing ammonium polyphosphate, urea and/or product issued from the reaction of ammonium polyphosphate with urea is an aqueous solution or suspension.

The method of the invention has advantageously one or more of the following characteristics :
- said solution or suspension has a solid content in containing ammonium polyphosphate, urea and product issued from the reaction of ammonium polyphosphate with urea in the range from about 50 to about 70% by weight, and/or
- the said solution or suspension contains at least a modified ammonium polyphosphate (MAPP) issued from the reaction of ammonium polyphosphate with urea, and/or
- the ammonium polyphosphate present in the solution or suspension or reacting with the urea is a APP compound of formula 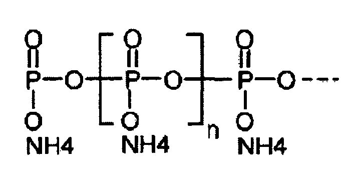 with n less than 10, advantageously comprised between 2 and 8, and/or
- the average value for "n" in weight for the said APP compound is comprised between 2 and 6, the solution or suspension being substantially free of compound of formula 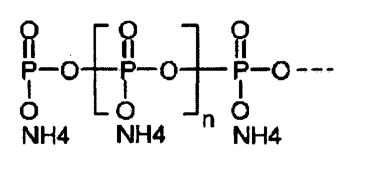 with n greater than 10, advantageously greater than 8, and/or
- the wood containing particles and/or fibres, prior to be mixed with a formaldehyde based resin system, are treated at a temperature comprised between 25°C and 150°C, advantageously between 35°C and 100°C, advantageously at a pressure higher than 10⁵ Pa, with the said solution or suspension containing ammonium polyphosphate, urea or/and products or compounds issued from the reaction of ammonium polyphosphate with urea, and/or
- the wood containing particles and/or fibres are adapted for the manufacture of particle boards, medium density fibreboards, and plywood boards (PB, MDF, PW), and/or
- said solution or suspension contains at least a modified ammonium polyphosphate (MAPP) issued from the reaction of ammonium polyphosphate with urea, and wherein the modified ammonium polyphosphate (MAPP) is used in an amount of 1 - 25 kg per ton of wood containing particles or/and fibres, and/or
- the wood containing particles or fibres are mixed to an aqueous solution or suspension containing urea and ammonium polyphosphate during the reaction of urea with ammonium polyphosphate, and/or
- the wood containing particles or fibres are treated in the said solution or suspension under an ammonia containing atmosphere, and/or
- the wood containing particles or fibres after being treated with the said solution or suspension are filtered and dried, before being mixed formaldehyde resin system, and/or
- the wood containing particles or fibres are first treated in a solution or suspension containing ammonium polyphosphate, then treated in a solution or suspension containing urea and possibly ammonium polyphosphate, and/or
- the formaldehyde laden products are selected from the group consisting of particle boards, medium density fibre boards and plywood (PB, MDF, PW).

The invention relates also to a product comprising at least wood containing particles and/or fibres and at least a formaldehyde based resin system for bonding together at least the wood containing particles and /or fibres, said product being produced by a method according to the invention, so as to reduce the emission of formaldehyde during the production of said products, as well as after the said production.

Suitably, MAPP can be used in an amount of 1 - 25 kg / ton of wood containing particles or fibres, preferably 5 - 20 kg / ton of wood containing particles or fibres.

### EXAMPLES:

### Example 1: preparation of aqueous solution/suspension of APP and Urea and/or MAPP

Various aqueous compositions have been prepared by mixing in water different ammonium polyphosphate with urea, possibly followed by partial or complete reaction between ammonium polyphosphate and urea. The solution or suspension were prepared so as to have a solid content comprised between 50 and 75%, such as a solid content of about 60%.

The following ammonium polyphosphates [NH₄ PO₃]ₙ have been used as starting material :
APP1 : [NH₄ PO₃]ₙ with n having as average value about 10 and a P₂O₅ weight content of about 60%, the weight average particle size being comprised between 5µm and 20µm
APP2 : [NH₄ PO₃]ₙ with n having as average value about 20 and a P₂O₅ weight content of about 65%, the weight average particle size being comprised between 5µm and 20µm
APP3 : [NH₄ PO₃]ₙ with n having as average value about 30 and a P₂O₅ weight content of about 69%, the weight average particle size being comprised between 5µm and 20µm
APP4 : [NH₄ PO₃]ₙ with n having as average value about 5 and a P₂O₅ weight content of about 69%, the weight average particle size being comprised between 5µm and 20µm. The compound is substantially free of compounds [NH₄ PO₃]ₙ with n greater than or equal to 10.
APP5 : [NH₄ PO₃]ₙ with n having as average value about 3 and a P₂O₅ weight content of about 69%, the weight average particle size being comprised between 5µm and 20µm. The compound is substantially free of compounds [NH₄ PO₃]ₙ with n greater than or equal to 8.
APP6 : [NH₄ PO₃]ₙ with n having as average value about 4 and a P₂O₅ weight content of about 70%, the weight average particle size being comprised between 5µm and 20µm. The compound is substantially free of compounds [NH₄ PO₃]ₙ with n greater than or equal to 8.
APP7 : [NH₄ PO₃]ₙ with n having as average value about 2.5 and a P₂O₅ weight content of about 70%, the weight average particle size being comprised between 5µm and 20µm. The compound is substantially free of compounds [NH₄ PO₃]ₙ with n equal to 1 and free of compounds [NH₄ PO₃]ₙ with n greater than or equal to 5.
APP8 : [NH₄ PO₃]ₙ with n having as average value about 3.5 and a P₂O₅ weight content of about 70%, the weight average particle size being comprised between 5µm and 20µm. The compound is substantially free of compounds [NH₄ PO₃]ₙ with n greater than or equal to 5.
urea : (NH₂CONH₂), with a weight average particle size comprised between 100µm and 2000µm.
MAPP(X) : reaction product of APPX (with X being an integer between 1 and 8) with urea, said reaction being carried out in an aqueous medium, at a sufficient temperature comprised between 20°C and 200°C (advantageously at a temperature comprised between 20°C and 100°C) and, if required or desired, under pressure, for a time required for having the partial or complete reaction of the APPX present in the reaction medium.

The following table gives the composition of the several solutions or suspensions ("S") which were prepared. In said table, R designates the weight ratio between APPX and Urea before any reaction between APPX and Urea, and P designates the percentage of reaction product (MAPPX) present in the solution or suspension, expressed as weight percentage of APPX having reacted with Urea.

When mixtures of AAPX's are used, the percentage of a compound APPX is the percentage by weight of said compound with respect to the total weight of the APPX's used for the preparation of the solution or suspension.

The solution or suspension can contain one or more additives, such as surfactant, phosphoric acid, boric acid, borax, etc.

| | | | | |
|---|---|---|---|---|
| S | APPX | R | P | Comments |
| 1 | APP1 | 6 | 0 | |
| 2 | APP1 | 6 | 25 | |
| 3 | APP1 | 6 | about 50 | |
| 4 | APP1 | 10 | 0 | |
| 5 | APP1 | 10 | 25 | |
| 6 | APP1 | 10 | about 50 | |
| 7 | APP2 | 10 | 25 | |
| 8 | APP3 | 10 | 25 | |
| 9 | APP4 | 10 | 25 | |
| 10 | AAP5 | 10 | 25 | 1 % borax present |
| 11 | AAP6 | 10 | 25 | 1 % borax present |
| 12 | APP7 | 10 | 25 | |
| 13 | APP8 | 10 | 25 | |
| 14 | APP2 | 10 | 50 | 1 % borax present |
| 15 | APP3 | 10 | 50 | |
| 16 | APP4 | 10 | 50 | 1 % borax present |
| 17 | APP5 | 10 | 50 | |
| 18 | APP6 | 10 | 60 | |
| 19 | APP7 | 10 | 70 | |
| 20 | APP8 | 10 | 80 | |

| S | APPX | R | P (%) | borax (%) |
|---|---|---|---|---|
| 21 | 25% APP1 + 75% APP3 | 6 | 0 | |
| 22 | 50% APP1 + 50% APP4 | 6 | 50 | |
| 23 | 50% APP1 + 50% APP6 | 6 | 60 | |
| 24 | 25% APP1 + 75% APP3 | 10 | 0 | |
| 25 | 50% APP1 + 50% APP4 | 10 | 50 | |
| 26 | 50% APP1 + 50% APP6 | 10 | 75 | |
| 27 | 50% APP2 + 50% APP6 | 10 | 50 | |
| 28 | 50% APP3 + 50% APP6 | 10 | 50 | |
| 29 | 50% APP4 + 50% APP6 | 10 | 50 | |
| 30 | 50% AAP5 + 50% APP6 | 10 | 50 | |
| 31 | 50% AAP6 + 25% APP1 + 25% APP2 | 10 | 50 | |
| 32 | 50% APP7 + 50% APP6 | 10 | 50 | |
| 33 | 50% APP8 + 50% APP6 | 10 | 50 | |
| 34 | 50% APP2 + 50% APP6 | 10 | 80 | |
| 35 | 50% APP3 + 50% APP6 | 10 | 80 | 1 |
| 36 | 50% APP4 + 50% APP6 | 10 | 80 | 2 |
| 37 | 50% APP5 + 50% APP6 | 10 | 80 | 5 |
| 38 | 50% APP6 + 25% APP1 + 25% APP2 | 10 | 80 | 1 |
| 39 | 50% APP7 + 50% APP6 | 10 | 90 | |
| 40 | 50% APP8 + 50% APP6 | 10 | about 100 | |

### Example 2 : preparation of particle board panels.

For the production of the panels, the wood particles were treated with the solutions/suspensions of example 1. After being dipped and mixed, the particles were dried . The weight content APPX/Urea/MAPPX in the wood particles was in a first set of tests 3kg per ton wood particles, 5kg per ton wood particles and 8 kg per ton wood particles.

In a second set of tests, the wood particles mixed into a solution or suspension containing APPX and Urea were submitted to a heat treatment for initiating a reaction for producing MAPPX, so as to have about all the APPX converted into MAPPX.

The particle board panels were prepared in a lab-scale hot press, the panel having the following characteristics:
- Length x width x thickness = 500 mm x 500 mm x 19 mm
- Density : 640 kg/m3
- Press factor: 7.5 s/mm
- Press pressure : 45 kg/cm2
- Gluing rate : 8% (dry resin / dry wood)
- Hardener SO4(NH4)2 : 2% (dry hardener / dry resin)
- Used resin : MUF with 4% of melamine and molar ratio Formaldehyde/NH2 = 0.48
- APPX and/or MAPPX: 3 or 5 or 8 kg(dry) / ton wood.

The boards thus manufactured were tested on strength (Internal Bond test, according to EN319, expressed in MPa or N/mm2) and on formaldehyde content (perforator test according to EN120 and expressed in mg of formaldehyde per 100 g of board).

The various panel boards have been tested. For comparison purposes, panels were prepared with particles boards dipped in a solution containing only urea (Panel Reference Urea - 300g urea per ton wood particles), with particles boards dipped in a solution containing only ammonium polyphosphate (panel reference APP - 2700g APP per ton wood particles). A further reference panel (basic reference panel) was prepared but without wood particles pretreated with APPX and/or Urea and/or MAPPX.

The results of said various tests are the followings :
a) the pretreatment of the wood particles with urea (panel reference urea with 300g urea per ton wood particles) enables a reduction of about 5% of the formaldehyde content with reference to the Basic reference panel.
b) the pretreatment of the wood particles with APPX alone (Panel reference APPX with 2700g APPX per ton wood particles) enables a reduction of the formaldehyde content of about 15% with respect to the Basic reference panel.
c) when pretreating wood particles with a solution or suspension of APPX and Urea (about 3 kg dry matter APPX and Urea per ton wood particles), a reduction of 35 to 40% of the formaldehyde content was achievable, while not affecting the internal bond strength.
d) when pretreating wood particles with a solution or suspension of APPX and Urea (about 5 kg dry matter APPX and Urea per ton wood particles), a reduction of 40 to 46% of the formaldehyde content was achievable, while not affecting the internal bond strength.
e) when preatreating wood particles with a solution or suspension containing MAPPX, the reduction of the formaldehyde content was higher than the reduction achieved by using the APPX and urea for preparing said MAPPX.
f) when forming the MAPPX in presence of the wood particles, the reduction of the formaldehyde content was at least equal to the reduction achieved by dipping wood particles into a solution or suspension containing MAPPX, but the internal bond strength of the panel with MAPPX formed in presence of the wood particles was at least equal to or better than the internal bond strength of the panel with wood particles dipped into a solution or suspension of MAPPX.

This examples are given as examples only.

## Claims

1. A method of production of formaldehyde laden products comprising
at least wood containing particles and/or fibres and at least a formaldehyde based resin system, wherein the method comprises at least the following steps :
a mixing or contacting step in which at least wood containing particles and/or fibres and formaldehyde based resin system are mixed or contacted together, and
a hardening step in which the mixture of at least wood containing particles and/or fibres and formaldehyde based resin system is hardened,
said method being **characterised in that** the wood containing particles and/or fibres, prior to be mixed or contacted with a formaldehyde based resin system, are treated with a solution or a suspension containing at least :
- ammonium polyphosphate APP with a water solubility at 25°C greater than 0.5g / 100ml and/or having a weighted average particle size of less than 50µm,
- urea, or/and
- reaction products or compounds MAPP issued from the reaction of urea with said ammonium polyphosphate, wherein the weight ratio ammonium polyphosphate/ urea used for the preparation of the said solution or suspension is comprised between 1 :1 and 25: 1, advantageously between 2 : 1 and 15 : 1, preferably between 5 : 1 ant 12: 1, advantageously at least partly during the reaction of urea with said ammonium polyphosphate for forming said reaction products or compounds MAPP, with reduced emission of formaldehyde during the production of said products, as well as after the said production.

2. The method according to claim 1, wherein the said reaction product has a water solubility at 25°C greater than 2g/100ml, advantageously greater than 10g/100ml, preferably greater than 20g/100ml.

3. The method of claim 1 or 2, said solution or suspension containing ammonium polyphosphate, urea and/or product issued from the reaction of ammonium polyphosphate with urea is an aqueous solution or suspension.

4. The method according to any one of the preceding claims, wherein said solution or suspension has a solid content in containing ammonium polyphosphate, urea and product issued from the reaction of ammonium polyphosphate with urea in the range from about 50 to about 70% by weight.

5. The method according to any one of the claims 1 to 4, wherein the said solution or suspension contains at least a modified ammonium polyphosphate MAPP issued from the reaction of ammonium polyphosphate with urea.

6. The method according to any one of the preceding claims, wherein the ammonium polyphosphate present in the solution or suspension or reacting with the urea is a APP compound of formula 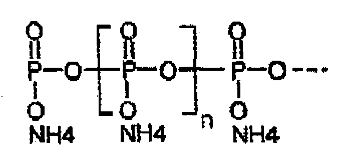 with n less than 10, advantageously comprised between 2 and 8.

7. The method according to claim 6, wherein the average value for "n" in weight for the said APP compound is comprised between 2 and 6, the solution or suspension being substantially free of compound of formula 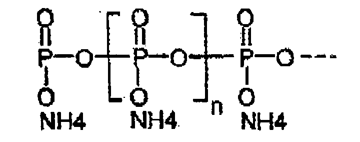 with n greater than 10, advantageously greater than 8.

8. The method of any one of the claims 1 to 7, wherein the wood containing particles and/or fibres, prior to be mixed with a formaldehyde based resin system, are treated at a temperature comprised between 25°C and 150°C, advantageously between 35°C and 100°C, advantageously at a pressure higher than 10⁵ Pa, with the said solution or suspension containing ammonium polyphosphate, urea or/and products or compounds issued from the reaction of ammonium polyphosphate with urea.

9. The method according to any one of the claims 1 to 8, wherein the wood containing particles and/or fibres are adapted for the manufacture of particle boards, medium density fibreboards, and plywood boards.

10. The method according to any one of the claims 1 to 7, wherein the said solution or suspension contains at least a modified ammonium polyphosphate MAPP issued from the reaction of ammonium polyphosphate with urea, and wherein the modified ammonium polyphosphate MAPP is used in an amount of 1 - 25 kg per ton of wood containing particles or/and fibres.

11. The method according to any one of the claims 1 to 8, wherein the wood containing particles or fibres are mixed to an aqueous solution or suspension containing urea and ammonium polyphosphate during the reaction of urea with ammonium polyphosphate.

12. The method according to any one of the claims 1 to 9, wherein the wood containing particles or fibres are treated in the said solution or suspension under an ammonia containing atmosphere.

13. The method according to any one of the claims 1 to 10, wherein the wood containing particles or fibres after being treated with the said solution or suspension are fltered and dried, before being mixed formaldehyde resin system.

14. The method of any one of the claims 1 to 11, wherein the wood containing particles or fibres are first treated in a solution or suspension containing ammonium polyphosphate, then treated in a solution or suspension containing urea and possibly ammonium polyphosphate.

15. The method of any one of the claims 1 to 12, wherein the formaldehyde laden products are selected from the group consisting of particle boards, medium density fibre boards and plywood.

16. Product comprising at least wood containing particles and/or fibres and at least a formaldehyde based resin system, said product being produced by a method according to any one of the claims 1 to 13, so as to reduce the emission of formaldehyde during the production of said products, as well as after the said production.

## Patentansprüche

1. Verfahren zur Herstellung von formaldehydbeladenen Produkten, umfassend mindestens Holz enthaltende Teilchen und/oder Fasern und mindestens ein formaldehydbasiertes Harzsystem, wobei das Verfahren mindestens die folgenden Schritte umfasst:
einen Schritt des Mischens oder In-Kontakt-Bringens, in welchem mindestens Holz enthaltende Teilchen und/oder Fasern und ein formaldehydbasiertes Harzsystem zusammen gemischt oder in Kontakt gebracht werden, und
einen Schritt des Härtens, in welchem die Mischung von mindestens Holz enthaltenden Teilchen und/oder Fasern und formaldehydbasiertem Harzsystem gehärtet wird,
wobei das Verfahren **dadurch gekennzeichnet ist, dass** die Holz enthaltenden Teilchen und/oder Fasern, bevor sie mit einem formaldehydbasierten Harzsystem gemischt oder in Kontakt gebracht werden, mit einer Lösung oder einer Suspension behandelt werden, welche mindestens enthält:
- Ammoniumpolyphosphat APP mit einer Wasserlöslichkeit bei 25°C größer als 0,5g / 100ml und/oder mit einer gewichteten mittleren Teilchengröße von weniger als 50µm,
- Harnstoff und/oder
- Reaktionsprodukte oder Verbindungen MAPP, welche aus der Reaktion von Harnstoff mit dem Ammoniumpolyphosphat hervorgehen, wobei das Gewichtsverhältnis Ammoniumpolyphosphat/Harnstoff, welches für die Zubereitung der Lösung oder Suspension verwendet wird, zwischen 1 : 1 und 25 : 1, vorteilhaft zwischen 2 : 1 und 15 : 1, bevorzugt zwischen 5 : 1 und 12 : 1 beträgt,
vorteilhaft mindestens teilweise während der Reaktion von Harnstoff mit dem Ammoniumpolyphosphat zum Bilden der Reaktionsprodukte oder Verbindungen MAPP, mit verringerter Emission von Formaldehyd während der Herstellung der Produkte und auch nach der Herstellung.

2. Verfahren nach Anspruch 1, wobei das Reaktionsprodukt eine Wasserlöslichkeit bei 25°C größer als 2g/100ml, vorteilhaft größer als 10g/100ml, bevorzugt größer als 20g/100ml aufweist.

3. Verfahren nach Anspruch 1 oder 2, wobei die Lösung oder Suspension, welche Ammoniumpolyphosphat, Harnstoff und/oder Produkt, welches aus der Reaktion von Ammoniumpolyphosphat mit Harnstoff hervorgeht, enthält, eine wässrige Lösung oder Suspension ist.

4. Verfahren nach einem der vorangehenden Ansprüche, wobei die Lösung oder Suspension einen Feststoffgehalt an enthaltendem Ammoniumpolyphosphat, Harnstoff und Produkt, welches aus der Reaktion von Ammoniumpolyphosphat mit Harnstoff hervorgeht, im Bereich von ungefähr 50 bis ungefähr 70 Gew.-% aufweist.

5. Verfahren nach einem der Ansprüche 1 bis 4, wobei die Lösung oder Suspension mindestens ein modifiziertes Ammoniumpolyphosphat MAPP, welches aus der Reaktion von Ammoniumpolyphosphat mit Harnstoff hervorgeht, enthält.

6. Verfahren nach einem der vorangehenden Ansprüche, wobei das Ammoniumpolyphosphat, welches in der Lösung oder Suspension vorhanden ist oder mit dem Harnstoff reagiert, eine APP-Verbindung nach Formel 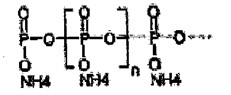 mit n kleiner als 10, vorteilhaft zwischen 2 und 8, ist.

7. Verfahren nach Anspruch 6, wobei der durchschnittliche Wert für "n" in Gewicht für die APP-Verbindung zwischen 2 und 6 beträgt, wobei die Lösung oder Suspension im Wesentlichen frei von Verbindung nach Formel 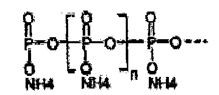 mit n größer als 10, vorteilhaft größer als 8, ist.

8. Verfahren nach einem der Ansprüche 1 bis 7, wobei die Holz enthaltenden Teilchen und/oder Fasern, bevor sie mit einem formaldehydbasierten Harzsystem gemischt werden, bei einer Temperatur zwischen 25°C und 150°C, vorteilhaft zwischen 35°C und 100°C, vorteilhaft bei einem Druck höher als 10⁵ Pa, mit der Lösung oder Suspension, welche Ammoniumpolyphosphat, Harnstoff und/oder Produkte oder Verbindungen, welche aus der Reaktion von Ammoniumpolyphosphat mit Harnstoff hervorgehen, enthält, behandelt werden.

9. Verfahren nach einem der Ansprüche 1 bis 8, wobei die Holz enthaltenden Teilchen und/oder Fasern für die Herstellung von Spanplatten, mitteldichten Faserplatten und Sperrholzplatten geeignet sind.

10. Verfahren nach einem der Ansprüche 1 bis 7, wobei die Lösung oder Suspension mindestens ein modifiziertes Ammoniumpolyphosphat MAPP enthält, welches aus der Reaktion von Ammoniumpolyphosphat mit Harnstoff hervorgeht, und wobei das modifizierte Ammoniumpolyphosphat MAPP in einer Menge von 1 - 25 kg pro Tonne Holz enthaltender Teilchen oder/und Fasern verwendet wird.

11. Verfahren nach einem der Ansprüche 1 bis 8, wobei die Holz enthaltenden Teilchen oder Fasern zu einer wässrigen Lösung oder Suspension, welche Harnstoff und Ammoniumpolyphosphat enthält, während der Reaktion von Harnstoff mit Ammoniumpolyphosphat zugemischt werden.

12. herfahren nach einem der Ansprüche 1 bis 9, wobei die Holz enthaltenden Teilchen oder Fasern in der Lösung oder Suspension unter einer ammoniakhaltigen Atmosphäre behandelt werden

13. Verfahren nach einem der Ansprüche 1 bis 10, wobei die Holz enthaltenden Teilchen oder Fasern, nachdem sie mit der Lösung oder Suspension behandelt wurden, filtriert und getrocknet werden, bevor sie mit dem Formaldehyd-Harzsystem gemischt werden.

14. Verfahren nach einem der Ansprüche 1 bis 11, wobei die Holz enthaltenden Teilchen oder Fasern zuerst in einer Lösung oder Suspension, welche Ammoniumpolyphosphat enthält, behandelt werden, dann in einer Lösung oder Suspension, welche Harnstoff und möglicherweise Ammoniumpolyphosphat enthält, behandelt werden.

15. Verfahren nach einem der Ansprüche 1 bis 12, wobei die formaldehydbeladenen Produkte ausgewählt sind aus der Gruppe, bestehend aus Spanplatten, mitteldichten Faserplatten und Sperrholzplatten.

16. Produkt, umfassend mindestens Holz enthaltende Teilchen und/oder Fasern und mindestens ein formaldehydbasiertes Harzsystem, wobei das Produkt durch ein Verfahren nach einem der Ansprüche 1 bis 13 hergestellt wird, so dass die Emission von Formaldehyd während der Herstellung der Produkte und auch nach der Herstellung verringert wird.

## Revendications

1. Procédé de fabrication de produits chargés de formaldéhyde comprenant au moins des particules et/ou des fibres contenant du bois et au moins un système de résine à base de formaldéhyde, dans lequel le procédé comprend au moins les étapes suivantes:
une étape de mélange ou de mise en contact dans laquelle au moins des particules et/ou des fibres contenant du bois et un système de résine à base de formaldéhyde sont mélangés ou mis en contact les uns avec les autres, et
une étape de durcissement dans laquelle le mélange au moins des particules et/ou des fibres contenant du bois et du système de résine à base de
formaldéhyde est durci,
ledit procédé étant **caractérisé en ce que** les particules et/ou les fibres contenant du bois, avant d'être mélangées ou mises en contact avec un système de résine à base de formaldéhyde, sont traitées avec une solution ou une suspension contenant au moins:
du polyphosphate d'ammonium APP avec une solubilité dans l'eau à 25°C qui est supérieure à 0,5 g/100 ml et/ou présentant une taille de particule moyenne pondérée inférieure à 50 µm,
de l'urée, ou/et
des produits de réaction ou des composés MAPP issus de la réaction de l'urée avec ledit polyphosphate d'ammonium, dans lequel le rapport pondéral polyphosphate d'ammonium/urée utilisé pour la préparation de ladite solution ou suspension est compris entre 1:1 et 25:1, avantageusement entre 2:1 et 15:1, de préférence entre 5:1 et 12:1,
avantageusement au moins partiellement pendant la réaction de l'urée avec ledit polyphosphate d'ammonium pour former lesdits produits de réaction ou composés MAPP, avec une émission réduite de formaldéhyde pendant la fabrication desdits produits, ainsi qu'après ladite fabrication.

2. Procédé selon la revendication 1, dans lequel ledit produit de réaction présente une solubilité dans l'eau à 25°C qui est supérieure à 2 g/100 ml, avantageusement supérieure à 10 g/100 ml, de préférence supérieure à 20 g/100 ml.

3. Procédé selon la revendication 1 ou 2, dans lequel ladite solution ou suspension contenant du polyphosphate d'ammonium, de l'urée et/ou un produit issu de la réaction du polyphosphate d'ammonium avec l'urée est une solution ou une suspension aqueuse.

4. Procédé selon l'une quelconque des revendications précédentes, dans lequel ladite solution ou suspension présente une teneur en matières solides contenant du polyphosphate d'ammonium, de l'urée et/ou un produit issu de la réaction du polyphosphate d'ammonium avec l'urée dans la gamme d'environ 50 à environ 70 % % en poids.

5. Procédé selon l'une quelconque des revendications 1 à 4, dans lequel ladite solution ou suspension contient au moins un polyphosphate d'ammonium modifié MAPP issu de la réaction du polyphosphate d'ammonium avec l'urée.

6. Procédé selon l'une quelconque des revendications précédentes, dans lequel le polyphosphate d'ammonium présent dans la solution ou la suspension ou réagissant avec l'urée est un composé APP de formule 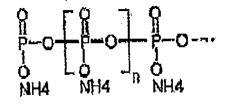 où n est inférieur à 10, et est avantageusement compris entre 2 et 8.

7. Procédé selon la revendication 6, dans lequel la valeur moyenne pour "n" en poids pour ledit composé APP est comprise entre 2 et 6, la solution ou la suspension étant sensiblement exempte du composé de formule 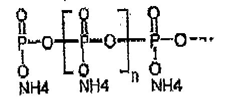 où n est supérieur à 10, avantageusement supérieur à 8.

8. Procédé selon l'une quelconque des revendications 1 à 7, dans lequel les particules et/ou les fibres contenant du bois, avant d'être mélangées avec un système de résine à base de formaldéhyde, sont traitées à une température comprise entre 25°C et 150°C, avantageusement entre 35°C et 100°C, avantageusement à une pression supérieure à 10⁵ Pa, avec ladite solution ou suspension contenant du polyphosphate d'ammonium, de l'urée et/ou des produits issus de la réaction du polyphosphate d'ammonium avec l'urée.

9. Procédé selon l'une quelconque des revendications 1 à 8, dans lequel les particules et/ou les fibres contenant du bois sont aptes à la fabrication de panneaux de particules, de panneaux de fibres de densité moyenne, et de panneaux de contreplaqué.

10. Procédé selon l'une quelconque des revendications 1 à 7, dans lequel ladite solution ou suspension contient au moins un polyphosphate d'ammonium modifié MAPP issu de la réaction du polyphosphate d'ammonium avec l'urée, et dans lequel le polyphosphate d'ammonium modifié MAPP est utilisé en une quantité de 1 - 25 kg par tonne de particules et/ou de fibres contenant du bois.

11. Procédé selon l'une quelconque des revendications 1 à 8, dans lequel les particules et/ou les fibres contenant du bois sont mélangées avec une solution ou une suspension aqueuse contenant de l'urée et du polyphosphate d'ammonium pendant la réaction de l'urée avec le polyphosphate d'ammonium.

12. Procédé selon l'une quelconque des revendications 1 à 9, dans lequel les particules et/ou les fibres contenant du bois sont traitées dans ladite solution ou suspension sous une atmosphère contenant de l'ammoniac.

13. Procédé selon l'une quelconque des revendications 1 à 10, dans lequel les particules et/ou les fibres contenant du bois, après avoir été traitées avec ladite solution ou suspension, sont filtrées et séchées, avant d'être mélangées avec le système de résine à base de formaldéhyde.

14. Procédé selon l'une quelconque des revendications 1 à 11, dans lequel les particules et/ou les fibres contenant du bois sont d'abord traitées dans une solution ou une suspension contenant du polyphosphate d'ammonium, puis traitées dans une solution ou une suspension contenant de l'urée et éventuellement du polyphosphate d'ammonium.

15. Procédé selon l'une quelconque des revendications 1 à 12, dans lequel les produits chargés de formaldéhyde sont sélectionnés dans le groupe composé de panneaux de particules, de panneaux de fibres de densité moyenne, et de contreplaqué.

16. Produit comprenant au moins des particules et/ou des fibres contenant du bois et au moins un système de résine à base de formaldéhyde, ledit produit étant fabriqué par un procédé selon l'une quelconque des revendications 1 à 13, de façon à réduire les émissions de formaldéhyde pendant la fabrication desdits produits, ainsi qu'après ladite fabrication.
